# EUROPEAN PATENT SPECIFICATION

(11) **EP 4 257 417 B1**
(45) Date of publication and mention of the grant of the patent: **01.04.2026**
(21) Application number: 23158384.0
(22) Date of filing: 24.02.2023
(51) Int. Cl.: B60L 53/37, B60L 53/80

(54) **SAFETY PROTECTION METHOD AND SYSTEM FOR BATTERY CHARGING AND SWAP STATION, MEDIUM, APPARATUS, AND BATTERY CHARGING AND SWAP STATION**
SICHERHEITSSCHUTZVERFAHREN UND -SYSTEM FÜR BATTERIELADE- UND WECHSELSTATION, MEDIUM, VORRICHTUNG UND BATTERIELADE- UND WECHSELSTATION
PROCÉDÉ ET SYSTÈME DE PROTECTION DE SÉCURITÉ POUR STATION DE CHARGE ET DE PERMUTATION DE BATTERIE, SUPPORT, APPAREIL ET STATION DE CHARGE ET PERMUTATION DE BATTERIE

(30) Priority: 29.03.2022 CN 202210318630
(43) Date of publication of application: 11.10.2023
(73) Proprietor: Nio Technology (Anhui) Co., Ltd, Hefei City, Anhui 230601 (CN)
(72) Inventor: WANG, Shuai, Shanghai (CN); ZHENG, Feifei, Shanghai (CN); XU, Huazhen, Shanghai (CN); LI, Zhibin, Shanghai (CN); ZOU, Jiyong, Shanghai (CN); LIU, Tao, Shanghai (CN)
(74) Representative: Vossius & Partner Patentanwälte Rechtsanwälte mbB

(56) References cited:
- WO-A1-2013/144958

## Description

### Technical Field

The disclosure relates to the technical field of safety protection, and in particular, to a safety protection method and system for a battery charging and swap station, a medium, an apparatus, and the battery charging and swap station.

### Background Art

With the rapid development of electric vehicles, consumers have an increasing tendency for choosing electric vehicles as a means of transportation. With the continuous increase in electric vehicle population, how to effectively provide rapid and effective energy replenishment for vehicles with insufficient energy has become a very concerned problem for vehicle owners and major manufacturers. Current mainstream electric energy replenishment solutions include a battery charging solution and a battery swap solution. Compared to the battery charging solution, the battery swap solution may swap a traction battery in a very short time and does not significantly affect the service life of the traction battery, and is therefore a main development trend of electric energy replenishment.

The battery swap solution needs to be carried out in a battery charging and swap station. At present, most battery charging and swap stations have realized automatic swap. Due to the need for cooperation of a plurality of battery swap apparatuses and mechanisms in a battery swap process, safety monitoring and protective measures in the battery swap process are essential. At present, a more common detection manner is to monitor human/object intrusion in the automatic battery swap process with a vision camera and a matched recognition algorithm. For example, the published PCT patent application WO 2013/144958 A1 discloses such a detection system. However, the current recognition algorithm can only perform detection in the battery swap process, resulting in small coverage of detection.

Accordingly, a novel technical solution is required in the art, to solve the problems described above.

### Summary

To solve at least one of the problems described above in the prior art, that is, to solve the problem of small coverage of an existing safety protection method, the present invention is set out in the appended set of claims.

By determining the actual monitoring region based on the obtained result of the electrical signals, and then controlling the safety scanning devices to perform safety monitoring based on the actual monitoring region, the safety protection method in the disclosure can expand the coverage of the monitoring regions. Specifically, through an arrangement enabling the position detection devices to send the electrical signals when blocked, the disclosure may determine a monitoring region under different conditions according to whether the electrical signals are obtained and the number of the obtained electrical signals, such that when the vehicle with a battery to be swapped is in different positions or the battery charging and swap station is in different modes, the safety monitoring may be carried out in a targeted manner, thereby expanding the coverage of safety monitoring. Efficient and reliable monitoring can be achieved by monitoring with the safety scanning devices.

Further, through disposing of a plurality of position detection devices and arrangement of same outside an entrance to the battery swap platform and corresponding to the battery swap platform, respectively, a position of the vehicle with a battery to be swapped may be determined based on electrical signals sent by the position detection devices in different positions, thereby improving the division accuracy of the actual monitoring region.

Further, through joint determination of the actual monitoring region in combination with a battery swap process signal and the electrical signals, efficient switching of the monitoring regions during battery swap may be implemented, thereby improving the monitoring effect.

Further, by determining apparatuses required to be stopped based on an open/closed status of a closable door after obtaining an intrusion signal, the safety protection method in the disclosure can implement safety protection measures in a targeted manner based on different battery swap phases.

Further, when an operating mode of the battery charging and swap station is a maintenance mode, the safety scanning device is controlled to stop working or stop sending out an intrusion signal, thereby avoiding troubles caused by alarm information during maintenance and inspection of the battery charging and swap station.

### Brief Description of the Drawings

A safety protection method and system for a battery charging and swap station, a medium, an apparatus, and the battery charging and swap station in the disclosure will be described below with reference to the accompanying drawings. In the accompanying drawings:
FIG. 1 is a schematic diagram of a battery charging and swap station according to the disclosure;
FIG. 2 is a flowchart of a safety protection method for a battery charging and swap station according to the disclosure;
FIG. 3 to FIG. 7 are diagrams of battery swap processes according to a possible embodiment; and
FIG. 8 is a system diagram of a safety protection system for a battery charging and swap station according to the disclosure.

### List of reference numerals

1. battery swap platform; 11. closable door; 2a, 2b, 2c, and 2d. position detection devices; 3. safety scanning device; 4. vehicle centering mechanism; 5. vehicle with battery to be swapped;
100. safety protection system; 110. obtaining module; 120. determination module; 130. control module; and 140. ascertainment module.

### Detailed Description of Embodiments

Preferred embodiments of the disclosure are described below with reference to the accompanying drawings. Those skilled in the art should understand that these embodiments are only used to explain the technical principles of the disclosure, and are not intended to limit the scope of protection of the disclosure. For example, although the embodiments below are described in combination with a battery charging and swap station being provided with four position detection devices and two safety scanning devices, they are not intended to limit the scope of protection of the disclosure. Those skilled in the art may adjust the number of the above position detection devices and safety scanning devices without departing from the principles of the disclosure, such that the method in the disclosure can be applicable to more specific application scenarios.

It should be noted that in the description of the disclosure, the terms, such as "center", "upper", "lower", "left", "right", "vertical", "horizontal", "front", and "rear", that indicate directions or positional relationships, are based on the directions or positional relationships shown in the accompanying drawings only for convenience of description, do not indicate or imply that the apparatus or element must have a specific orientation or be constructed and operated in a specific orientation, and therefore cannot be construed as limitation to the disclosure. In addition, the terms "first", "second", and "third" are for descriptive purposes only, and cannot be interpreted as indicating or implying relative importance.

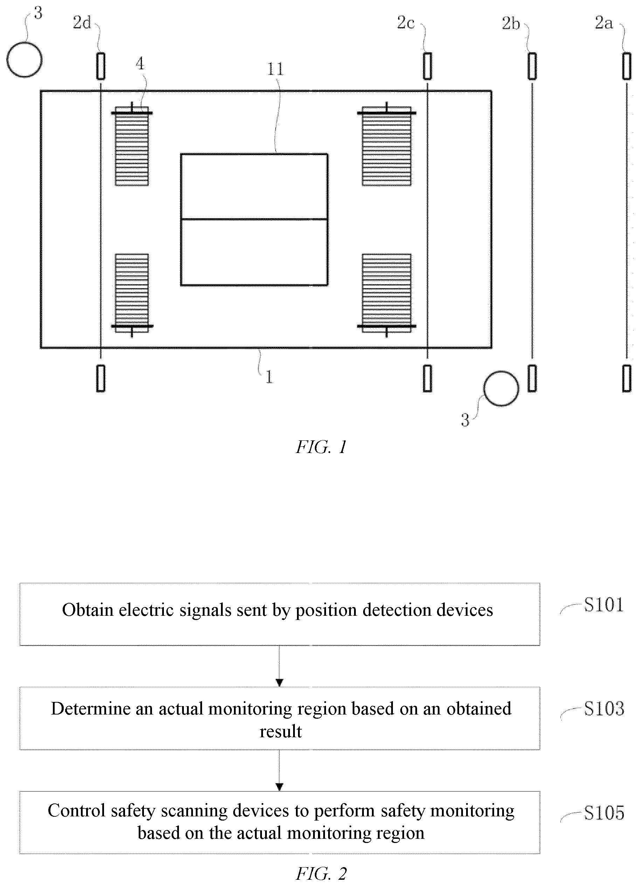

First, a battery charging and swap station in the disclosure is described with reference to FIG. 1. Herein, FIG. 1 is a schematic diagram of a battery charging and swap station according to the disclosure.

As shown in FIG. 1, in an embodiment, the battery charging and swap station in the disclosure includes a battery swap platform 1, a battery swap apparatus, position detection devices (2a, 2b, 2c, and 2d in FIG. 1), and safety scanning devices 3, where the battery swap platform 1 is configured to bear a vehicle with a battery to be swapped, the position detection devices are configured to send electrical signals when blocked, and the safety scanning device 3 is configured to monitor one of a plurality of preset monitoring regions each time.

The battery swap platform 1 is built from metal frames and metal plates. One end (i.e. a right end shown in FIG. 1) of the battery swap platform along a length direction (i.e. a horizontal direction in FIG. 1) is an entrance, at which a gate for the vehicle to enter and exit is provided for the battery charging and swap station. The other end (i.e. a left end shown in FIG. 1) of the battery swap platform 1 along the length direction forms a closed end with the battery charging and swap station. A closable door 11 is arranged in the middle of the battery swap platform 1, the closable door 11 may be opened or closed in a sliding manner, and two roller apparatuses for supporting vehicle wheels are respectively arranged on front and rear sides of the closable door 11 along the length direction of the battery swap platform 1. When the vehicle with a battery to be swapped is driven to the battery swap platform 1, the front and rear wheels are supported and positioned by the roller apparatuses, respectively, to achieve positioning of the vehicle in the length direction.

The battery swap apparatus includes a vehicle hoisting apparatus, vehicle centering apparatuses 4, a battery swap robot, a hoisting apparatus for a battery swap robot, etc. The battery swap robot is provided with a locking/unlocking mechanism and a battery bearing platform. The battery bearing platform is configured to bear a battery, and the locking/unlocking mechanism is configured to lock/unlock a traction battery, so as to implement demounting and mounting of the traction battery. There is a specific gap between the battery swap platform 1 and the ground, which allows the battery swap robot to bear the traction battery to go in or out. The vehicle centering apparatuses 4 are vehicle wheel push rods. There are four vehicle wheel push rods. The four push rods are arranged at the four roller apparatuses, respectively, and can move back and forth along a width direction (i.e. a vertical direction in FIG. 1) of the battery swap platform 1. Each push rod pushes one vehicle wheel from an outer side of the vehicle wheel. Under the joint action of the four push rods, the vehicle can be centered and positioned. The vehicle hoisting apparatus includes four hoisting support rods, which can lift a chassis of the vehicle from different positions, respectively, so as to lift the vehicle as a whole. The hoisting apparatus for a battery swap robot is arranged below the battery swap platform 1, specifically below the closable door 11, and is configured to lift the battery swap robot to pass through the closable door 11, such that the battery swap robot can dock with the chassis of the vehicle and lock/unlock the battery.

There are a plurality of position detection devices, a part of the position detection devices are arranged outside the entrance to the battery swap platform 1, and the other part of the position detection devices are arranged corresponding to the battery swap platform 1. Specifically, the position detection devices in the disclosure are photoelectric sensors, and more specifically, they are through-beam photoelectric sensors. There are four groups of through-beam photoelectric sensors, which are 2a, 2b, 2c, and 2d in sequence along a direction of the vehicle entering the battery swap platform 1. The two groups of through-beam photoelectric sensors 2a and 2b are spaced outside the entrance to the battery swap platform 1, and another two groups of through-beam photoelectric sensors 2c and 2d are arranged corresponding to two ends of the battery swap platform 1 along the length direction, and transmit ends and receive ends of each group of through-beam photoelectric sensors are distributed on two sides of the battery swap platform 1 along the width direction. When the vehicle with a battery to be swapped forms a block between the transmit ends and the receive ends of the through-beam photoelectric sensors during traveling, light paths transmitted from the transmit ends are blocked, and the receive ends cannot receive light and therefore trigger actions of sending out electrical signals. Therefore, a position of the vehicle with a battery to be swapped may be ascertained based on the number and positions of electrical signals sent by the through-beam photoelectric sensors.

Through disposing of the plurality of photoelectric sensors and arrangement of same outside the entrance to the battery swap platform 1 and corresponding to the battery swap platform 1, respectively, the position of the vehicle with a battery to be swapped may be determined based on the electrical signals sent by the photoelectric sensors in different positions, thereby improving the division accuracy of the actual monitoring region. Moreover, the determination accuracy may be improved by arranging two groups of photoelectric sensors outside the entrance to the battery swap platform 1, and arranging one group of photoelectric sensors at two ends of the battery swap platform 1 in the length direction, respectively, thereby reducing false ascertainment.

Preferably, the safety scanning devices 3 are safety laser scanners. There are two safety laser scanners, in the disclosure, arranged along a diagonal of the battery swap platform 1. The safety laser scanners detect a human body or an object within a scanning range through a time of flight (TOF) technology. Each safety laser scanner has a scanning angle of about 180°. Therefore, a superimposed scanning range of the two safety laser scanners arranged along the diagonal of the battery swap platform 1 may cover the battery swap platform 1. Further, the safety laser scanner may also self-define a scanning region, and perform intrusion monitoring on the self-defined scanning region. When a human body or an object enters the scanning region, the safety laser scanner is triggered and sends out an intrusion signal. Therefore, a plurality of scanning regions may be self-defined, such that different scanning regions are monitored in different battery swap phases.

The delay can be shortened by performing scanning and intrusion monitoring on one of the plurality of self-defined scanning regions with the safety laser scanner, thereby implementing efficient monitoring. A monitoring range for the battery swap platform may be fully covered by arranging the two safety laser scanners along the diagonal of the battery swap platform 1.

Certainly, a specific arrangement of the above battery charging and swap station is merely used for illustrating the principles of the disclosure, and is not intended to limit the scope of protection of the disclosure. Those skilled in the art may adjust the above arrangement without departing from the principles of the disclosure, so that the disclosure can be applicable to more specific application scenarios.

For example, those skilled in the art may adjust a specific arrangement of the battery swap platform 1, an apparatus type specifically included in the battery swap apparatus, a specific form, the number and arrangement positions of the position detection devices, and a specific form, the number and arrangement positions of the safety scanning devices 3 without departing from the principles of the disclosure.

For example, the battery swap platform 1 may not be provided with the closable door 11, but instead, after being hoisted by the vehicle hoisting apparatus, the vehicle is directly driven by the battery swap robot to a position between the chassis of the vehicle and the battery swap platform 1 for battery swap.

For another example, the type and the number of battery swap apparatuses may be adjusted. For example, one or more of the vehicle hoisting apparatus, the vehicle centering apparatuses 4, the battery swap robot, and the hoisting apparatus for a battery swap robot may be omitted, or the above apparatuses are replaced with other apparatuses.

For another example, the position detection devices may alternatively be electromagnetic position sensors, laser position sensors, etc. The number and arrangement positions thereof may also be adjusted based on specific application scenarios, as long as the position of the vehicle with a battery to be swapped can be effectively obtained.

For another example, the specific form of the safety scanning devices 3 is not unique, as long as it can monitor one of the plurality of preset monitoring regions. For example, the safety scanning devices 3 may alternatively be safety gratings, vision cameras, safety light curtains, etc.

A safety protection method for a battery charging and swap station in the disclosure is described below with reference to FIG. 2. Herein, FIG. 2 is a flowchart of a safety protection method for a battery charging and swap station according to the disclosure.

As shown in FIG. 2, to solve the problems of slow triggering and small coverage of an existing safety protection method, the safety protection method for the battery charging and swap station in the disclosure includes the following steps.

S101: Obtain electrical signals sent by position detection devices. For example, when being blocked, the position detection device will send out one electrical signal. In this case, the electrical signal may be obtained. When not being blocked, the position detection device will not send out the electrical signal. In this case, the electrical signal cannot be obtained.

S103: Determine an actual monitoring region based on an obtained result. For example, a plurality of preset monitoring regions are pre-stored in safety scanning devices, and the actual monitoring region is one of the plurality of preset monitoring regions. Based on the number of the electrical signals obtained in the previous step and sending positions of the electrical signals, a position of a current vehicle with a battery to be swapped is determined, and one of the plurality of preset monitoring regions is selected as the actual monitoring region based on the position of the vehicle with a battery to be swapped.

S105: Control the safety scanning devices to perform safety monitoring based on the actual monitoring region. For example, after the actual monitoring region is determined, the safety scanning devices scan and monitor the actual monitoring region. Once it is found that there is human or object intrusion in the actual monitoring region, the safety scanning devices send out intrusion signals, to implement corresponding safety protection measures.

By determining the actual monitoring region based on the obtained result of the electrical signals, and then controlling the safety scanning devices to perform safety monitoring based on the actual monitoring region, the safety protection method in the disclosure can expand the coverage of the monitoring regions and increase the speed of monitoring triggering. Specifically, through an arrangement enabling the position detection devices to send the electrical signals when blocked, the disclosure may determine a monitoring region under different conditions according to whether the electrical signals are obtained and the number of the obtained electrical signals, such that when the vehicle with a battery to be swapped is in different positions or the battery charging and swap station is in different modes, the safety monitoring may be carried out in a targeted manner, thereby expanding the coverage of safety monitoring. The delay can be shortened and efficient monitoring can be implemented by monitoring with the safety scanning devices.

For example, the battery charging and swap station may perform safety monitoring whether in an automatic battery swap mode, a manual battery swap mode, or a shutdown state, and monitoring ranges may be switched based on different modes of the battery charging and swap station. For another example, during battery swap, whether the vehicle with a battery to be swapped is in a phase of not entering the battery swap platform, a phase of entering the battery swap platform, a battery swap phase, or a phase of being driven away from the battery swap platform, a corresponding monitoring range may be determined for safety monitoring.

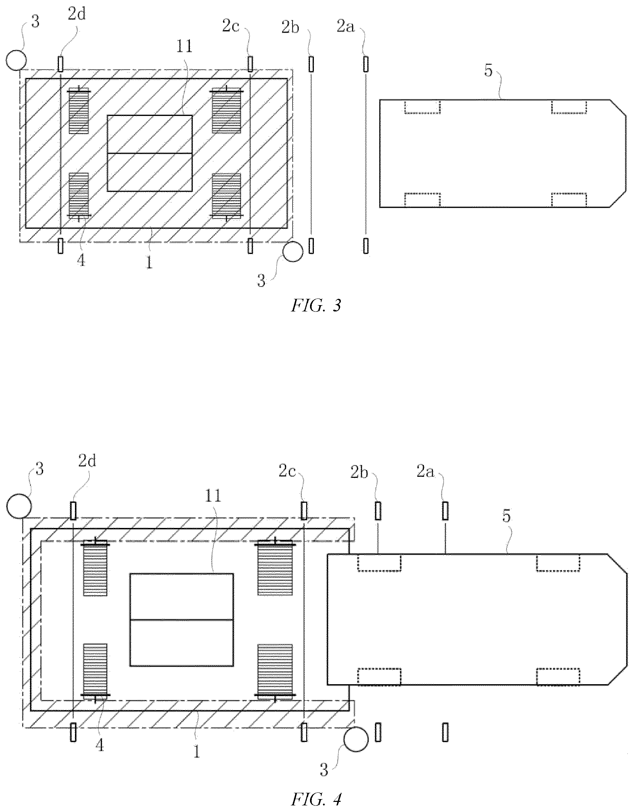

Preferred embodiments of the safety protection method in the disclosure are described below in combination with FIG. 3 to FIG. 7. Herein, FIG. 3 to FIG. 7 are diagrams of battery swap processes according to a possible embodiment.

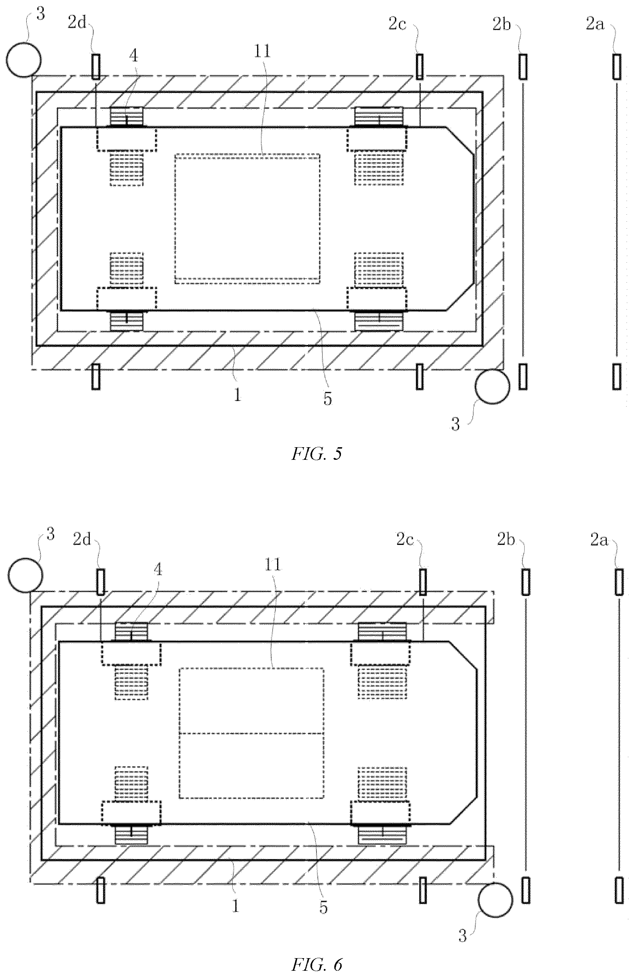

In an embodiment, referring to FIG. 3 to FIG. 5, based on different battery swap phases, the preset monitoring region includes three types, which are a first monitoring region, a second monitoring region, and a third monitoring region, respectively. Herein, a shadow region enclosed by a dot-dash line in FIG. 3 is the first monitoring region, which covers the entire battery swap platform; a shadow region enclosed by a dot-dash line in FIG. 4 is the second monitoring region, which covers two sides (i.e. an upper side and a lower side in FIG. 4) of the battery swap platform that extend along a length direction of the vehicle with a battery to be swapped (i.e. along a length direction of the battery swap platform) and one side (i.e. a left side in FIG. 4) of the battery swap platform that extends along a width direction of the vehicle with a battery to be swapped and away from an entrance to the battery swap platform; and a shadow region enclosed by a dot-dash line in FIG. 5 is the third monitoring region, which covers the two sides (i.e. an upper side and a lower side in FIG. 5) of the battery swap platform that extend along the length direction of the vehicle with a battery to be swapped and two sides (i.e. a left side and a right side in FIG. 5) of the battery swap platform that extend along the width direction of the vehicle with a battery to be swapped.

It should be noted that the division of the above monitoring regions is only a more preferred embodiment, and those skilled in the art may adjust the number and ranges of the above preset monitoring regions based on specific application scenarios.

In an embodiment, when the battery charging and swap station is configured in the manner described in the above embodiment, the safety protection method further includes: obtaining a battery swap process signal; and determining the actual monitoring region based on the obtained result of the electrical signals and an obtained result of the battery swap process signal.

In this embodiment, the battery swap process signal may include a closing signal of a closable door, a centering completion signal, a battery swap completion signal, etc. Herein, the closing signal of the closable door is an electrical signal sent after the closable door is closed, the centering completion signal is an electrical signal sent when vehicle centering apparatuses complete vehicle centering and positioning, and the battery swap completion signal is an electrical signal sent by a battery swap apparatus after the battery of the vehicle with a battery to be swapped is swapped with a fully charged traction battery. After the battery swap process signal is obtained, the position of the current vehicle with a battery to be swapped and the current battery swap phase may be determined based on the battery swap process signal and the obtained electrical signals sent by the position detection devices, to accurately determine the actual monitoring region based on the battery swap process signal and the electrical signals.

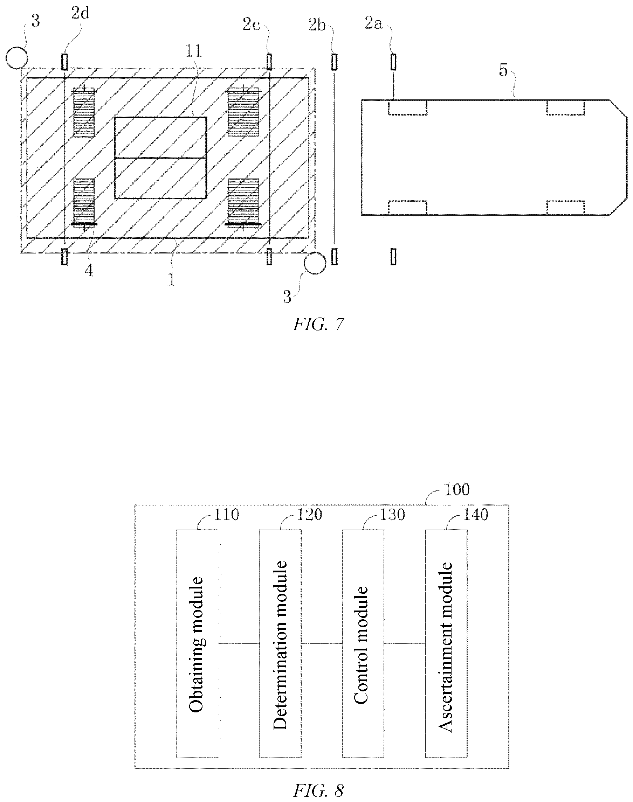

The above step of determining the actual monitoring region is illustrated in five possible cases below with reference to FIG. 3 to FIG. 7.
(1) First, referring to FIG. 3, when no battery swap process signal and no electrical signals from the position detection devices are obtained, it is determined that the actual monitoring region is the first monitoring region. For example, it may be learned from FIG. 3 that when battery swap has just started, the vehicle 5 with a battery to be swapped is outside the entrance to the battery swap platform, and none of four photoelectric sensors 2a, 2b, 2c, and 2d are blocked. Therefore, the electrical signals sent by the photoelectric sensors cannot be obtained in this case. Meanwhile, because the battery swap process has just started, and all battery swap apparatuses are in an inactive phase, the battery swap process signal cannot be obtained. In this case, it is determined that the actual monitoring region is the first monitoring region, and two safety laser scanners are controlled to perform safety monitoring on the entire battery swap platform.
(2) Next, referring to FIG. 4, when the closable-door closing signal and electrical signals sent by the position detection devices arranged outside the entrance to the battery swap platform are obtained, it is determined that the actual monitoring region is the second monitoring region. For example, with the advancement of the battery swap process, the vehicle 5 with a battery to be swapped is backed into the battery swap platform 1 from the outside of the battery charging and swap station. During the backing, the vehicle blocks the photoelectric sensors 2a and 2b in sequence, and the photoelectric sensors 2a and 2b send the electrical signals in sequence. Meanwhile, to ensure that the vehicle 5 with a battery to be swapped is smoothly backed into the battery swap platform, the closable door 11 positioned in the middle of the battery swap platform is powered on to be closed, and when it is closed in place, the closable-door closing signal is sent. When the above signals are received, it is determined that the actual monitoring region is the second monitoring region, and the two safety laser scanners 3 are controlled to perform safety monitoring on the upper and lower sides and the left side (the orientations shown in FIG. 4) of the battery swap platform 1.
(3) Then, referring to FIG. 5, when the centering completion signal and electrical signals sent by the position detection devices arranged corresponding to the battery swap platform are obtained, it is determined that the actual monitoring region is the third monitoring region. For example, after the vehicle 5 with a battery to be swapped is parked on roller apparatuses of the battery swap platform 1 to implement positioning in the length direction, the vehicle centering apparatuses 4 are started to perform centering and positioning on the vehicle 5 with a battery to be swapped, and the closable door 11 is opened such that a battery swap robot can swap the battery of the vehicle 5. After centering and positioning are completed, the vehicle centering apparatus 4 sends the centering completion signal. Meanwhile, after the vehicle 5 with a battery to be swapped is parked on the battery swap platform 1, the vehicle 5 blocks the photoelectric sensors 2c and 2d in sequence and quits blocking the photoelectric sensors 2a and 2b, and the photoelectric sensors 2c and 2d send the electrical signals in sequence. When the above signals are received, it is determined that the actual monitoring region is the third monitoring region, and the two safety laser scanners 3 are controlled to perform safety monitoring on the upper and lower sides and the left and right sides (the orientations shown in FIG. 5) of the battery swap platform 1.
(4) Next, referring to FIG. 6, when the closable-door closing signal, the battery swap completion signal, and electrical signals sent by the position detection devices arranged corresponding to the battery swap platform are obtained, it is determined that the actual monitoring region is the second monitoring region. For example, with the advancement of the battery swap process, the battery swap robot completes battery swap for the vehicle 5, and the closable door is closed. In this case, the battery swap robot sends the battery swap completion signal, the closable door 11 sends the closable-door closing signal after being closed in place, and the vehicle 5 with a battery to be swapped may be driven out of the battery swap platform. Before being driven out, the vehicle 5 still blocks the photoelectric sensors 2c and 2d, and the photoelectric sensors 2c and 2d may still send the electrical signals. When the above signals are received, it is determined that the actual monitoring region is the second monitoring region, and the two safety laser scanners 3 are controlled to perform safety monitoring on the upper and lower sides and the left side (the orientations shown in FIG. 6) of the battery swap platform 1.
(5) Finally, referring to FIG. 7, when the battery swap completion signal and an electrical signal sent by only a position detection device, away from the entrance to the battery swap platform, in the two position detection devices arranged outside the entrance to the battery swap platform are obtained, it is determined that the actual monitoring region is the first monitoring region. For example, after battery swap is completed, the vehicle 5 is driven out of the battery swap platform. As the vehicle 5 is driven out, the vehicle 5 quits blocking the photoelectric sensors 2d, 2c, and 2b, and only the photoelectric sensor 2a is still blocked and sends the electrical signal. In case (4), after the battery swap completion signal is obtained and only the electrical signal sent by the photoelectric sensor 2a is received, it is determined that the actual monitoring region is the first monitoring region, and the two safety laser scanners 3 are controlled to perform safety monitoring on the entire battery swap platform 1.

Through joint determination of the actual monitoring region in combination with the battery swap process signal and the electrical signals, efficient and accurate switching of the monitoring regions during battery swap may be implemented, thereby improving the monitoring effect. Moreover, the above monitoring can also be real-time monitoring of the entire battery swap process.

In an alternative embodiment, those skilled in the art can also determine the actual monitoring region only based on the received electrical signals sent by the photoelectric sensors. For example, when no electrical signals are obtained, it proves that the vehicle with a battery to be swapped is in a position away from the battery swap platform, and it is determined that the actual monitoring region is the first monitoring region. When only the electrical signals sent by the photoelectric sensors 2a and 2b arranged outside the entrance to the battery swap platform are obtained, it proves that the vehicle is being backed into the battery swap platform, and it is determined that the actual monitoring region is the second monitoring region. When only the electrical signals sent by the photoelectric sensors 2c and 2d arranged corresponding to the battery swap platform are obtained, it proves that the vehicle has completely been on the battery swap platform, and it is determined that the actual monitoring region is the third monitoring region.

Certainly, the above alternative embodiment is only an example, and those skilled in the art may also adjust specific determination logic based on the principles of the disclosure. For example, the actual monitoring region may be determined based on characteristics of the process in which the vehicle is driven out of the battery swap platform.

In an embodiment, the safety protection method further includes: when intrusion signals sent by the safety scanning devices are obtained, ascertaining an open/closed status of the closable door; determining apparatuses required to be stopped based on an ascertainment result; and controlling the apparatuses required to be stopped to stop working. Specifically, if the closable door is in an open state, it is determined that the apparatuses required to be stopped are the vehicle hoisting apparatus, the vehicle centering apparatuses, the hoisting apparatus for a battery swap robot, and the closable door; and if the closable door is in a closed state, it is determined that the apparatuses required to be stopped are the vehicle centering apparatuses and the closable door.

For example, when the safety laser scanners send the intrusion signals, it proves that there is a human body or an object entering the actual monitoring region, and emergency stop is required to ensure the safety of the battery swap process. Based on different open and closed states of the closable door, the current battery swap process may be known. When the closable door is opened, it proves that the vehicle is in the battery swap process, and all battery swap apparatuses are in an operating state. When the closable door is closed, it proves that the vehicle is in a non-battery-swap process, for example, in a phase of battery swap completion or a phase of backing the vehicle into the battery swap platform, and only some battery swap apparatuses are in an operating state. Therefore, based on different states of the closable door, the apparatuses and devices currently in an operating state may be known, the apparatuses required to be stopped are determined, and then these apparatuses are controlled in a targeted manner to stop working. Specifically, if the closable door is in the open state, at least the vehicle hoisting apparatus, the vehicle centering apparatuses, the hoisting apparatus for a battery swap robot, and the closable door need to be controlled to be stopped in emergency; and if the closable door is in the closed state, at least the vehicle centering apparatuses and the closable door need to be controlled to be stopped in emergency.

Herein, the state of the closable door may be determined based on the above closable-door closing signal. If the closable-door closing signal is received, it is determined that the closable door is in the closed state, and if the closable-door closing signal is not received, it is determined that the closable door is in the open state. Certainly, the state may alternatively be obtained in another manner, for example, a position sensor is arranged on or near the closable door to detect the open/closed status of the closable door.

In addition, in the disclosure, by setting a safety relay to be connected to a servo driver, emergency stop may be output to a stop interface of the servo driver to perform stop control on the servo driver of each apparatus. Meanwhile, after delay for a period of time, a contactor between the above servo driver and a corresponding motor is disconnected, and a contactor between the above servo driver and another motor related to the battery swap platform is disconnected.

By determining the apparatuses required to be stopped based on the open/closed status of the closable door after obtaining an intrusion signal, the safety protection method in the disclosure can implement safety protection measures in a targeted manner based on different battery swap phases. In addition, by a control manner of outputting a stop signal by the safety relay to the servo driver to implement emergency stop, efficient and rapid stop can be implemented, thereby reducing safety accidents.

In an embodiment, the safety protection method further includes: obtaining a current operating mode of the battery charging and swap station; and if the current operating mode is a maintenance mode, controlling the safety scanning devices to stop working or stop sending out intrusion signals.

For example, the battery charging and swap station needs to enter the maintenance mode when there is a fault or a maintenance date is reached. The maintenance mode may be enabled in many manners, such as by inserting a key into a lock hole of a maintenance switch and turning the key, or by inputting a specific operation instruction via a terminal. In any way, an enable signal of the maintenance mode may be obtained, and once the maintenance mode is enabled, the safety scanning devices are controlled to stop working or stop sending out the intrusion signals, thereby avoiding troubles caused by frequent alarm information due to workers going in or out the monitoring region during maintenance and inspection of the battery charging and swap station.

A possible battery swap process is described below with reference to FIG. 3 to FIG. 7.

As shown in FIG. 3 to FIG. 7, in a possible battery swap process:
When battery swap is started, the vehicle 5 with a battery to be swapped is first driven to a designated parking position outside the battery charging and swap station, none of the photoelectric sensors 2a, 2b, 2c, and 2d are blocked, and there is no battery swap process signal, it is determined that the actual monitoring region is the first monitoring region, and the two safety laser scanners 3 are controlled to perform scanning and intrusion monitoring on the first monitoring region.

Then, the vehicle 5 with a battery to be swapped is backed into the battery swap platform 1 from the designated parking position. During the backing, when the photoelectric sensors 2a and 2b are blocked in sequence to send the electrical signals, and the closable door 11 is closed and sends the closable-door closing signal after being completely closed, it is determined that the actual monitoring region is the second monitoring region, and the two safety laser scanners 3 are controlled to perform scanning and intrusion monitoring on the second monitoring region.

Next, the vehicle 5 with a battery to be swapped is backed onto the battery swap platform 1, front and rear wheels are parked on the roller apparatuses to implement positioning in the length orientation, the photoelectric sensors 2c and 2d are blocked in sequence to send the electrical signals, and the photoelectric sensors 2a and 2b quit being blocked to stop sending the electrical signals. Meanwhile, the vehicle centering apparatuses 4 send the centering completion signal after centering and positioning of the vehicle 5 are completed, and the closable door 11 is opened, ready for battery swap. In this case, it is determined that the actual monitoring region is the third monitoring region, and the two safety laser scanners 3 are controlled to perform scanning and intrusion monitoring on the third monitoring region.

During battery swap, the battery swap robot, hoisted by the hoisting apparatus for a battery swap robot, removes a used battery on the vehicle 5 with a battery to be swapped, then transfers the used battery to a battery rack of the battery charging and swap station for charging, transfers the fully charged battery to the bottom of the vehicle 5 with a battery to be swapped, mounts the fully charged battery, hoisted by the hoisting apparatus for a battery swap robot, onto a chassis of the vehicle 5 with a battery to be swapped, and sends out the battery swap completion signal after mounting. When the battery swap robot drops below the closable door 11, the closable door 11 starts to be closed and sends the closing signal of the closable door after being completely closed. The photoelectric sensors 2c and 2d are still blocked to send the electrical signals, and the photoelectric sensors 2a and 2b do not send the electrical signals because they are not blocked. In this case, it is determined that the actual monitoring region is the second monitoring region, and the two safety laser scanners 3 are controlled to perform scanning and intrusion monitoring on the second monitoring region.

Finally, the vehicle 5 with a battery swapped is driven out of the battery swap platform 1. During the process in which the vehicle is driven out, the photoelectric sensors 2d and 2c quit being blocked to stop sending the electrical signals, and the photoelectric sensors 2b and 2a are blocked in sequence to send the electrical signals. When the vehicle 5 continues being driven out, the photoelectric sensor 2b also quits being blocked, and only the photoelectric sensor 2a sends the electrical signal, it is determined that the actual monitoring region is the first monitoring region, and the two safety laser scanners 3 are controlled to perform scanning and intrusion monitoring on the first monitoring region.

Although the steps are described in the above order in this embodiment, those skilled in the art may understand that in order to achieve the effects of this embodiment, different steps are not necessarily performed in this order, but can be performed simultaneously (in parallel) or in a reverse order, and these simple variations are within the scope of protection of the disclosure.

A safety protection system for a battery charging and swap station in the disclosure is briefly described below with reference to FIG. 8. Herein, FIG. 8 is a system diagram of a safety protection system for a battery charging and swap station according to the disclosure.

As shown in FIG. 8, the battery charging and swap station in the disclosure includes a battery swap platform, a battery swap apparatus, position detection devices, and safety scanning devices, where the battery swap platform is configured to bear a vehicle with a battery to be swapped, the position detection devices are configured to send electrical signals when blocked, and the safety scanning device is configured to monitor one of a plurality of preset monitoring regions each time. The safety protection system 100 for the battery charging and swap station includes: an obtaining module 110, a determination module 120, and a control module 130, where the obtaining module 110 is configured to obtain the electrical signals sent by the position detection devices; the determination module 120 is configured to determine an actual monitoring region based on an obtained result; and the control module 130 is configured to control the safety scanning devices to perform safety monitoring based on the actual monitoring region, where the actual monitoring region is one of the plurality of preset monitoring regions. In an embodiment, for detailed description of function implementation, reference may be made to the description of S101 to S105.

In an embodiment, the preset monitoring regions include a first monitoring region, a second monitoring region, and a third monitoring region, where the first monitoring region covers the battery swap platform, the second monitoring region covers two sides of the battery swap platform that extend along a length direction of the vehicle with a battery to be swapped and one side of the battery swap platform that extends along a width direction of the vehicle with a battery to be swapped and away from an entrance to the battery swap platform, and the third monitoring region covers the two sides of the battery swap platform that extend along the length direction of the vehicle with a battery to be swapped and two sides of the battery swap platform that extend along the width direction of the vehicle with a battery to be swapped. In an embodiment, for detailed description of function implementation, reference may be made to the description of the above method steps.

In an embodiment, there are a plurality of position detection devices, a part of the position detection devices are arranged outside the entrance to the battery swap platform, the other part of the position detection devices are arranged corresponding to the battery swap platform, and the determination module 120 is further configured to determine the actual monitoring region based on the obtained result in the following manner: when no electrical signals are obtained, determining that the actual monitoring region is the first monitoring region; and/or when only electrical signals sent by the position detection devices arranged outside the entrance to the battery swap platform are obtained, determining that the actual monitoring region is the second monitoring region; and/or when only electrical signals sent by the position detection devices arranged corresponding to the battery swap platform are obtained, determining that the actual monitoring region is the third monitoring region. In an embodiment, for detailed description of function implementation, reference may be made to the description of the above method steps.

In an embodiment, there are a plurality of position detection devices, a part of the position detection devices are arranged outside the entrance to the battery swap platform, the other part of the position detection devices are arranged corresponding to the battery swap platform, and the obtaining module 110 is further configured to obtain a battery swap process signal; and the determination module 120 is further configured to determine the actual monitoring region based on the obtained result of the electrical signals and an obtained result of the battery swap process signal. In an embodiment, for detailed description of function implementation, reference may be made to the description of the above method steps.

In an embodiment, a closable door is arranged on the battery swap platform, the battery swap process signal includes a closable-door closing signal, and the determination module 120 is further configured to determine the actual monitoring region based on the obtained result of the electrical signals and the obtained result of the battery swap process signal in the following manner: when the closable-door closing signal and electrical signals sent by the position detection devices arranged outside the entrance to the battery swap platform are obtained, determining that the actual monitoring region is the second monitoring region. In an embodiment, for detailed description of function implementation, reference may be made to the description of the above method steps.

In an embodiment, the battery swap apparatus includes a vehicle centering mechanism arranged on the battery swap platform, the battery swap process signal includes a centering completion signal, and the determination module 120 is further configured to determine the actual monitoring region based on the obtained result of the electrical signals and the obtained result of the battery swap process signal in the following manner: when the centering completion signal and electrical signals sent by the position detection devices arranged corresponding to the battery swap platform are obtained, determining that the actual monitoring region is the third monitoring region. In an embodiment, for detailed description of function implementation, reference may be made to the description of the above method steps.

In an embodiment, a closable door is arranged on the battery swap platform, the battery swap process signal includes a closable-door closing signal and a battery swap completion signal, and the determination module 120 is further configured to determine the actual monitoring region based on the obtained result of the electrical signals and the obtained result of the battery swap process signal in the following manner: when the closable-door closing signal, the battery swap completion signal, and electrical signals sent by the position detection devices arranged corresponding to the battery swap platform are obtained, determining that the actual monitoring region is the second monitoring region. In an embodiment, for detailed description of function implementation, reference may be made to the description of the above method steps.

In an embodiment, the plurality of position detection devices include two position detection devices arranged outside the entrance to the battery swap platform, the battery swap process signal includes a battery swap completion signal, and the determination module 120 is further configured to determine the actual monitoring region based on the obtained result of the electrical signals and the obtained result of the battery swap process signal in the following manner: when the battery swap completion signal and an electrical signal sent by only a position detection device, away from the entrance to the battery swap platform, in the two position detection devices arranged outside the entrance to the battery swap platform are obtained, determining that the actual monitoring region is the first monitoring region. In an embodiment, for detailed description of function implementation, reference may be made to the description of the above method steps.

In an embodiment, a closable door is arranged on the battery swap platform, and the obtaining module 110 is further configured to obtain intrusion signals sent by the safety scanning devices; the safety protection system 100 further includes an ascertainment module 140, and the ascertainment module 140 is configured to ascertain an open/closed status of the closable door when the obtaining module 110 obtains the intrusion signals sent by the safety scanning devices; the determination module 120 is further configured to determine apparatuses required to be stopped based on an ascertainment result; and the control module 130 is further configured to control the apparatuses required to be stopped to stop working. In an embodiment, for detailed description of function implementation, reference may be made to the description of the above method steps.

In an embodiment, the battery swap apparatus includes a vehicle hoisting apparatus, vehicle centering apparatuses, and a hoisting apparatus for a battery swap robot, and the determination module 120 is further configured to determine the apparatuses required to be stopped based on the ascertainment result in the following manner: if the closable door is in an open state, determining that the apparatuses required to be stopped are the vehicle hoisting apparatus, the vehicle centering apparatuses, the hoisting apparatus for a battery swap robot, and the closable door; and if the closable door is in a closed state, determining that the apparatuses required to be stopped are the vehicle centering apparatuses and the closable door. In an embodiment, for detailed description of function implementation, reference may be made to the description of the above method steps.

In an embodiment, the obtaining module 110 is further configured to obtain a current operating mode of the battery charging and swap station; and the determination module 120 is further configured to: when the current operating mode is a maintenance mode, control the safety scanning devices to stop working or stop sending out intrusion signals. In an embodiment, for detailed description of function implementation, reference may be made to the description of the above method steps.

It should be noted that the safety protection system 100 for the battery charging and swap station provided in the above embodiments is only illustrated by the division of the above functional modules (such as the obtaining module 110, the determination module 120, the control module 130, and the ascertainment module 140). In practical applications, the above functional modules may be implemented by different functional units according to requirements, that is, the functional modules in the embodiments are further split or combined, for example, the functional modules in the above embodiments may be combined into one functional module, or further split into a plurality of sub-modules to complete all or some of the functions described above. The names of the functional modules involved in the embodiments are merely for distinguishing purpose and are not to be construed as limiting the disclosure.

Those skilled in the art can understand that all or some of the procedures in the method of one of the above embodiments of the disclosure may also be implemented by a computer program instructing relevant hardware. The computer program may be stored in a computer-readable storage medium, and when the computer program is executed by a processor, the steps of the above method embodiments may be performed. The computer program includes computer program codes, which may be in a source code form, an object code form, an executable file form, some intermediate forms, or the like. The computer-readable storage medium may include: any entity or apparatus that can carry the computer program codes, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Various embodiments regarding components in the disclosure may be implemented in hardware, or implemented by software modules running on one or more processors, or implemented in combinations thereof. Those skilled in the art should understand that a microprocessor or a digital signal processor (DSP) may be used in practice to implement some or all of the functions of some or all of the components in the server and client according to the embodiments of the disclosure. The disclosure may alternatively be implemented as devices or device programs (for example, PC programs and PC program products) for performing some or all of the methods as described herein. Such programs for implementing the disclosure may be stored on a PC readable medium, or may be in the form of one or more signals. Such signals may be obtained by downloading from an Internet website, or provided on a carrier signal, or provided in any other form.

The disclosure further provides a computer-readable storage medium. In an embodiment of the computer-readable storage medium according to the disclosure, the computer-readable storage medium may be configured to store a program for performing the safety protection method for the battery charging and swap station in the above method embodiment, and the program may be loaded and run by a processor to perform the above safety protection method for the battery charging and swap station. For ease of description, only parts related to the embodiments of the disclosure are shown. For specific technical details that are not disclosed, reference may be made to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

The disclosure further provides a control apparatus. In an embodiment of the control apparatus according to the disclosure, the control apparatus includes a processor and a memory. The memory may be configured to store a program for performing the safety protection method for the battery charging and swap station in the above method embodiment, and the processor may be configured to execute the program in the memory. The program includes, but is not limited to, the program for performing the safety protection method for the battery charging and swap station in the above method embodiment. For ease of description, only parts related to the embodiments of the disclosure are shown. For specific technical details that are not disclosed, reference may be made to the method part of the embodiments of the disclosure. The control apparatus may be an apparatus formed by various electronic devices.

The disclosure further provides a battery charging and swap station. The battery charging and swap station includes a battery swap platform, a battery swap apparatus, position detection devices, and safety scanning devices, where the battery swap platform is configured to bear a vehicle with a battery to be swapped, the position detection devices are configured to send electrical signals when blocked, the safety scanning device is configured to monitor one of a plurality of preset monitoring regions each time, and the battery charging and swap station further includes the above control apparatus.

Heretofore, the technical solutions of the disclosure have been described with reference to the preferred embodiments shown in the accompanying drawings. However, those skilled in the art can readily understand that the scope of protection of the disclosure is apparently not limited to these specific embodiments. Those skilled in the art may make equivalent changes or substitutions to the related technical features without departing from the scope of the claims, and all the technical solutions with such changes or substitutions shall fall within the scope of protection of the claims.

## Claims

1. A safety protection method for a battery charging and swap station, wherein that the safety protection method comprises:
obtaining electrical signals sent by position detection devices of the battery charging and swap station, wherein the electrical signals are sent by the position detection devices when the position detection devices are blocked by a current vehicle with a battery to be swapped (S101);
determining a position of the current vehicle with a battery to be swapped based on the number and positions of the obtained electrical signals;
selecting one of a plurality of preset monitoring regions as an actual monitoring region based on the position of the current vehicle with a battery to be swapped (S103); and
controlling safety scanning devices (3) of the battery charging and swap station to perform safety monitoring based on the actual monitoring region (S105).

2. The safety protection method for the battery charging and swap station according to claim 1, wherein the preset monitoring regions comprise a first monitoring region, a second monitoring region, and a third monitoring region, the first monitoring region covers the battery swap platform (1), the second monitoring region covers two sides of the battery swap platform (1) that extend along a length direction of the vehicle (5) with a battery to be swapped and one side of the battery swap platform (1) that extends along a width direction of the vehicle (5) with a battery to be swapped and away from an entrance to the battery swap platform (1), and the third monitoring region covers the two sides of the battery swap platform (1) that extend along the length direction of the vehicle (5) with a battery to be swapped and two sides of the battery swap platform (1) that extend along the width direction of the vehicle (5) with a battery to be swapped.

3. The safety protection method for the battery charging and swap station according to claim 2, wherein the safety protection method further comprises:
when no electrical signals are obtained, determining that the actual monitoring region is the first monitoring region; and/or
when only electrical signals sent by the position detection devices arranged outside the entrance to the battery swap platform (1) are obtained, determining that the actual monitoring region is the second monitoring region; and/or
when only electrical signals sent by the position detection devices arranged corresponding to the battery swap platform (1) are obtained, determining that the actual monitoring region is the third monitoring region.

4. The safety protection method for the battery charging and swap station according to claim 2 or 3, wherein the safety protection method further comprises:
obtaining a battery swap process signal; and
determining the actual monitoring region based on the obtained result of the electrical signals and an obtained result of the battery swap process signal.

5. The safety protection method for the battery charging and swap station according to claim 4, wherein the battery swap process signal comprises a closable-door closing signal, and the safety protection method further comprises:
when the closable-door closing signal and electrical signals sent by the position detection devices arranged outside the entrance to the battery swap platform (1) are obtained, determining that the actual monitoring region is the second monitoring region.

6. The safety protection method for the battery charging and swap station according to claim 4 or 5, wherein the battery swap process signal comprises a centering completion signal, and the safety protection method further comprises:
when the centering completion signal and electrical signals sent by the position detection devices arranged corresponding to the battery swap platform (1) are obtained, determining that the actual monitoring region is the third monitoring region.

7. The safety protection method for the battery charging and swap station according to any one of claims 4 to 6, wherein the battery swap process signal comprises a closable-door closing signal and a battery swap completion signal, and the safety protection method further comprises:
when the closable-door closing signal, the battery swap completion signal, and electrical signals sent by the position detection devices arranged corresponding to the battery swap platform (1) are obtained, determining that the actual monitoring region is the second monitoring region.

8. The safety protection method for the battery charging and swap station according to any one of claims 4 to 7, wherein the battery swap process signal comprises a battery swap completion signal, and the safety protection method further comprises:
when the battery swap completion signal and an electrical signal sent by only a position detection device, away from the entrance to the battery swap platform (1), in the two position detection devices arranged outside the entrance to the battery swap platform (1) are obtained, determining that the actual monitoring region is the first monitoring region.

9. The safety protection method for the battery charging and swap station according to any one of claims 5 to 8, wherein the safety protection method further comprises:
when intrusion signals sent by the safety scanning devices (3) are obtained, ascertaining an open/closed status of the closable door (11);
determining apparatuses required to be stopped based on an ascertainment result; and
controlling the apparatuses required to be stopped to stop working.

10. The safety protection method for the battery charging and swap station according to claim 9, wherein the step of "determining apparatuses required to be stopped based on an ascertainment result" further comprises:
if the closable door (11) is in an open state, determining that the apparatuses required to be stopped are a vehicle hoisting apparatus, vehicle centering apparatuses (4), a hoisting apparatus for a battery swap robot, and the closable door (11); and
if the closable door (11) is in a closed state, determining that the apparatuses required to be stopped are the vehicle centering apparatuses (4) and the closable door (11).

11. The safety protection method for the battery charging and swap station according to any one of claims 1 to 10, wherein the safety protection method further comprises:
obtaining a current operating mode of the battery charging and swap station; and
if the current operating mode is a maintenance mode, controlling the safety scanning devices (3) to stop working or stop sending out intrusion signals.

12. A safety protection system (100) for a battery charging and swap station, wherein the battery charging and swap station comprises a battery swap platform (1), a battery swap apparatus, position detection devices (2a, 2b, 2c, and 2d), and safety scanning devices (3), the battery swap platform (1) is configured to bear a vehicle (5) with a battery to be swapped (5), the position detection devices (2a, 2b, 2c, and 2d) are configured to send electrical signals when blocked, and the safety scanning device (3) is configured to monitor one of a plurality of preset monitoring regions each time; and
the safety protection system (100) comprises:
an obtaining module (110) configured to obtain the electrical signals sent by the position detection devices (2a, 2b, 2c, and 2d) when the position detection devices (2a, 2b, 2c, and 2d) are blocked by a current vehicle with a battery to be swapped;
a determination module (120) configured to determine a position of the current vehicle with a battery to be swapped based on the number of and positions of the obtained electrical signals and to select one of the plurality of preset monitoring regions as an actual monitoring region based on the position of the current vehicle with a battery to be swapped; and
a control module (130) configured to control the safety scanning devices (3) to perform safety monitoring based on the actual monitoring region.

13. The safety protection system (100) for the battery charging and swap station according to claim 12, wherein the preset monitoring regions comprise a first monitoring region, a second monitoring region, and a third monitoring region, the first monitoring region covers the battery swap platform (1), the second monitoring region covers two sides of the battery swap platform (1) that extend along a length direction of the vehicle (5) with a battery to be swapped (5) and one side of the battery swap platform (1) that extends along a width direction of the vehicle (5) with a battery to be swapped (5) and away from an entrance to the battery swap platform (1), and the third monitoring region covers the two sides of the battery swap platform (1) that extend along the length direction of the vehicle (5) with a battery to be swapped (5) and two sides of the battery swap platform (1) that extend along the width direction of the vehicle (5) with a battery to be swapped (5).

14. The safety protection system (100) for the battery charging and swap station according to claim 13, wherein there are a plurality of position detection devices, a part of the position detection devices are arranged outside the entrance to the battery swap platform (1), the other part of the position detection devices are arranged corresponding to the battery swap platform (1), and the determination module (120) is further configured to determine the actual monitoring region based on the obtained result in the following manner:
when no electrical signals are obtained, determining that the actual monitoring region is the first monitoring region; and/or
when only electrical signals sent by the position detection devices arranged outside the entrance to the battery swap platform (1) are obtained, determining that the actual monitoring region is the second monitoring region; and/or
when only electrical signals sent by the position detection devices arranged corresponding to the battery swap platform (1) are obtained, determining that the actual monitoring region is the third monitoring region.

15. The safety protection system (100) for the battery charging and swap station according to claim 13 or 14, wherein there are a plurality of position detection devices, a part of the position detection devices are arranged outside the entrance to the battery swap platform (1), and the other part of the position detection devices are arranged corresponding to the battery swap platform (1);
the obtaining module (110) is further configured to obtain a battery swap process signal; and
the determination module (120) is further configured to determine the actual monitoring region based on the obtained result of the electrical signals and an obtained result of the battery swap process signal.

## Patentansprüche

1. Sicherheitsschutzverfahren für eine Batterielade- und -wechselstation, wobei das Sicherheitsschutzverfahren Folgendes umfasst:
Erhalten von elektrischen Signalen, gesendet von Positionsdetektionsvorrichtungen der Batterielade- und - wechselstation, wobei die elektrischen Signale durch die Positionsdetektionsvorrichtungen gesendet werden, wenn die Positionsdetektionsvorrichtungen durch ein aktuelles Fahrzeug mit einer zu wechselnden Batterie blockiert werden (S101);
Bestimmen einer Position des aktuellen Fahrzeugs mit einer zu wechselnden Batterie basierend auf der Anzahl und den Positionen der erhaltenen elektrischen Signale;
Auswählen einer von mehreren voreingestellten Überwachungsregionen als eine tatsächliche Überwachungsregion basierend auf der Position des aktuellen Fahrzeugs mit einer zu wechselnden Batterie (S103); und
Steuern von Sicherheitsabtastvorrichtungen (3) der Batterielade- und -wechselstation zum Durchführen von Sicherheitsüberwachung basierend auf der tatsächlichen Überwachungsregion (S105).

2. Sicherheitsschutzverfahren für die Batterielade- und -wechselstation nach Anspruch 1, wobei die voreingestellten Überwachungsregionen eine erste Überwachungsregion, eine zweite Überwachungsregion und eine dritte Überwachungsregion umfassen, wobei die erste Überwachungsregion die Batteriewechselplattform (1) abdeckt, die zweite Überwachungsregion zwei Seiten der Batteriewechselplattform (1), die sich entlang einer Längsrichtung des Fahrzeugs (5) mit einer zu wechselnden Batterie erstrecken, und eine Seite der Batteriewechselplattform (1), die sich entlang einer Breitenrichtung des Fahrzeugs (5) mit einer zu wechselnden Batterie und weg von einem Eingang zur Batteriewechselplattform (1) erstreckt, abdeckt, und die dritte Überwachungsregion die zwei Seiten der Batteriewechselplattform (1), die sich entlang der Längsrichtung des Fahrzeugs (5) mit einer zu wechselnden Batterie und zwei Seiten der Batteriewechselplattform (1), die sich entlang der Breitenrichtung des Fahrzeugs (5) mit einer zu wechselnden Batterie erstrecken, abdeckt.

3. Sicherheitsschutzverfahren für die Batterielade- und -wechselstation nach Anspruch 2, wobei das Sicherheitsschutzverfahren ferner Folgendes umfasst:
wenn keine elektrischen Signale erhalten werden, Bestimmen, dass die tatsächliche Überwachungsregion die erste Überwachungsregion ist; und/oder
wenn nur elektrische Signale, die durch die Positionsdetektionsvorrichtungen gesendet werden, die außerhalb des Eingangs zur Batteriewechselplattform (1) angeordnet sind, erhalten werden, Bestimmen, dass die tatsächliche Überwachungsregion die zweite Überwachungsregion ist; und/oder
wenn nur elektrische Signale, die durch die Positionsdetektionsvorrichtungen gesendet werden, die entsprechend der Batteriewechselplattform (1) angeordnet sind, erhalten werden, Bestimmen, dass die tatsächliche Überwachungsregion die dritte Überwachungsregion ist.

4. Sicherheitsschutzverfahren für die Batterielade- und -wechselstation nach Anspruch 2 oder 3, wobei das Sicherheitsschutzverfahren ferner Folgendes umfasst:
Erhalten eines Batteriewechselprozesssignals; und
Bestimmen der tatsächlichen Überwachungsregion basierend auf dem erhaltenen Ergebnis der elektrischen Signale und einem erhaltenen Ergebnis des Batteriewechselprozesssignals.

5. Sicherheitsschutzverfahren für die Batterielade- und -wechselstation nach Anspruch 4, wobei das Batteriewechselprozesssignal ein Schließsignal einer schließbaren Tür umfasst und wobei das Sicherheitsschutzverfahren ferner Folgendes umfasst:
wenn das Schließsignal einer schließbaren Tür und elektrische Signale, die durch die Positionsdetektionsvorrichtungen gesendet werden, die außerhalb des Eingangs zur Batteriewechselplattform (1) angeordnet sind, erhalten werden, Bestimmen, dass die tatsächliche Überwachungsregion die zweite Überwachungsregion ist.

6. Sicherheitsschutzverfahren für die Batterielade- und -wechselstation nach Anspruch 4 oder 5, wobei das Batteriewechselprozesssignal ein Zentrierabschlusssignal umfasst und wobei das Sicherheitsschutzverfahren ferner Folgendes umfasst:
wenn das Zentrierabschlusssignal und elektrische Signale, die durch die Positionsdetektionsvorrichtungen gesendet werden, die entsprechend der Batteriewechselplattform (1) angeordnet sind, erhalten werden, Bestimmen, dass die tatsächliche Überwachungsregion die dritte Überwachungsregion ist.

7. Sicherheitsschutzverfahren für die Batterielade- und -wechselstation nach einem der Ansprüche 4 bis 6, wobei das Batteriewechselprozesssignal ein Schließsignal einer schließbaren Tür und ein Batteriewechselabschlusssignal umfasst und wobei das Sicherheitsschutzverfahren ferner Folgendes umfasst:
wenn das Schließsignal einer schließbaren Tür, das Batteriewechselabschlusssignal und elektrische Signale, die durch die Positionsdetektionsvorrichtungen gesendet werden, die entsprechend der Batteriewechselplattform (1) angeordnet sind, erhalten werden, Bestimmen, dass die tatsächliche Überwachungsregion die zweite Überwachungsregion ist.

8. Sicherheitsschutzverfahren für die Batterielade- und -wechselstation nach einem der Ansprüche 4 bis 7, wobei das Batteriewechselprozesssignal ein Batteriewechselabschlusssignal umfasst und wobei das Sicherheitsschutzverfahren ferner Folgendes umfasst:
wenn das Batteriewechselabschlusssignal und ein elektrisches Signal, das nur durch eine Positionsdetektionsvorrichtung, die entfernt vom Eingang zur Batteriewechselplattform (1) ist, aus den zwei Positionsdetektionsvorrichtungen, die außerhalb der Batteriewechselplattform (1) angeordnet sind, erhalten werden, Bestimmen, dass die tatsächliche Überwachungsregion die erste Überwachungsregion ist.

9. Sicherheitsschutzverfahren für die Batterielade- und -wechselstation nach einem der Ansprüche 5 bis 8, wobei das Sicherheitsschutzverfahren ferner Folgendes umfasst:
wenn Eindringungssignale, gesendet durch die Sicherheitsabtastvorrichtungen (3), erhalten werden, Überprüfen des Offen/Geschlossen-Status der schließbaren Tür (11);
Bestimmen von Einrichtungen, die gestoppt werden müssen, basierend auf dem Überprüfungsergebnis, und
Steuern der Einrichtungen, die gestoppt werden müssen, um deren Betrieb zu stoppen.

10. Sicherheitsschutzverfahren für die Batterielade- und -wechselstation nach Anspruch 9, wobei der Schritt zum "Bestimmen von Einrichtungen, die gestoppt werden müssen, basierend auf dem Überprüfungsergebnis" ferner Folgendes umfasst:
wenn die schließbare Tür (11) in einem geöffneten Zustand ist, Bestimmen, dass die Einrichtungen, die gestoppt werden müssen, eine Fahrzeughebevorrichtung, Fahrzeugzentriervorrichtungen (4), eine Hebevorrichtung für einen Batteriewechselroboter und die schließbare Tür (11) sind; und
wenn die schließbare Tür (11) in einem geschlossenen Zustand ist, Bestimmen, dass die Einrichtungen, die gestoppt werden müssen, die Fahrzeugzentriervorrichtungen (4) und die schließbare Tür (11) sind.

11. Sicherheitsschutzverfahren für die Batterielade- und -wechselstation nach einem der Ansprüche 1 bis 10, wobei das Sicherheitsschutzverfahren ferner Folgendes umfasst:
Erhalten eines aktuellen Betriebsmodus der Batterielade- und -wechselstation; und
wenn der aktuelle Betriebsmodus ein Wartungsmodus ist, Steuern der Sicherheitsabtastvorrichtungen (3), um deren Betrieb zu stoppen oder das Aussenden von Eindringungssignalen zu stoppen.

12. Sicherheitsschutzsystem (100) für eine Batterielade- und -wechselstation, wobei die Batterielade- und -wechselstation eine Batteriewechselplattform (1), eine Batteriewechseleinrichtung, Positionsdetektionsvorrichtungen (2a, 2b, 2c und 2d) und Sicherheitsabtastvorrichtungen (3) umfasst, wobei die Batteriewechselplattform (1) ausgelegt ist zum Aufnehmen eines Fahrzeugs (5) mit einer zu wechselnden Batterie (5), die Positionsdetektionsvorrichtungen (2a, 2b, 2c und 2d) ausgelegt sind zum Senden von elektrischen Signalen, wenn blockiert, und die Sicherheitsabtastvorrichtung (3) dazu ausgelegt ist, jedes Mal eine von mehreren voreingestellten Überwachungsregionen zu überwachen; und wobei das Sicherheitsschutzsystem (100) Folgendes umfasst:
ein Erhaltemodul (110), ausgelegt zum Erhalten der durch die Positionsdetektionsvorrichtungen (2a, 2b, 2c und 2d) gesendeten elektrischen Signale, wenn die Positionsdetektionsvorrichtungen (2a, 2b, 2c und 2d) durch ein aktuelles Fahrzeug mit einer zu wechselnden Batterie blockiert sind;
ein Bestimmungsmodul (120), ausgelegt zum Bestimmen einer Position des aktuellen Fahrzeugs mit einer zu wechselnden Batterie basierend auf der Anzahl und den Positionen der erhaltenen elektrischen Signale und zum Auswählen einer der mehreren voreingestellten Überwachungsregionen als eine tatsächliche Überwachungsregion basierend auf der Position des aktuellen Fahrzeugs mit einer zu wechselnden Batterie; und
ein Steuermodul (130), ausgelegt zum Steuern der Sicherheitsabtastvorrichtung (3) zum Durchführen einer Sicherheitsüberwachung basierend auf der tatsächlichen Überwachungsregion.

13. Sicherheitsschutzsystem (100) für die Batterielade- und -wechselstation nach Anspruch 12, wobei die voreingestellten Überwachungsregionen eine erste Überwachungsregion, eine zweite Überwachungsregion und eine dritte Überwachungsregion umfassen, wobei die erste Überwachungsregion die Batteriewechselplattform (1) abdeckt, die zweite Überwachungsregion zwei Seiten der Batteriewechselplattform (1), die sich entlang einer Längsrichtung des Fahrzeugs (5) mit einer zu wechselnden Batterie (5) erstrecken, und eine Seite der Batteriewechselplattform (1), die sich entlang einer Breitenrichtung des Fahrzeugs (5) mit einer zu wechselnden Batterie (5) und weg von einem Eingang zur Batteriewechselplattform (1) erstreckt, abdeckt, und die dritte Überwachungsregion die zwei Seiten der Batteriewechselplattform (1), die sich entlang der Längsrichtung des Fahrzeugs (5) mit einer zu wechselnden Batterie (5) und zwei Seiten der Batteriewechselplattform (1), die sich entlang der Breitenrichtung des Fahrzeugs (5) mit einer zu wechselnden Batterie (5) erstrecken, abdeckt.

14. Sicherheitsschutzsystem (100) für die Batterielade- und -wechselstation nach Anspruch 13, wobei es mehrere Positionsdetektionsvorrichtungen gibt, wobei ein Teil der Positionsdetektionsvorrichtungen außerhalb des Eingangs zur Batteriewechselplattform (1) angeordnet ist, der andere Teil der Positionsdetektionsvorrichtungen entsprechend der Batteriewechselplattform (1) angeordnet ist und das Bestimmungsmodul (120) ferner ausgelegt ist zum Bestimmen der tatsächlichen Überwachungsregion basierend auf dem erhaltenen Ergebnis in der folgenden Weise:
wenn keine elektrischen Signale erhalten werden, Bestimmen, dass die tatsächliche Überwachungsregion die erste Überwachungsregion ist; und/oder
wenn nur elektrische Signale, die durch die Positionsdetektionsvorrichtungen gesendet werden, die außerhalb des Eingangs zur Batteriewechselplattform (1) angeordnet sind, erhalten werden, Bestimmen, dass die tatsächliche Überwachungsregion die zweite Überwachungsregion ist; und/oder
wenn nur elektrische Signale, die durch die Positionsdetektionsvorrichtungen gesendet werden, die entsprechend der Batteriewechselplattform (1) angeordnet sind, erhalten werden, Bestimmen, dass die tatsächliche Überwachungsregion die dritte Überwachungsregion ist.

15. Sicherheitsschutzsystem (100) für die Batterielade- und -wechselstation nach Anspruch 13 oder 14, wobei es mehrere Positionsdetektionsvorrichtungen gibt, wobei ein Teil der Positionsdetektionsvorrichtungen außerhalb des Eingangs zur Batteriewechselplattform (1) angeordnet ist und der andere Teil der Positionsdetektionsvorrichtungen entsprechend der Batteriewechselplattform (1) angeordnet ist;
wobei das Erhaltemodul (110) ferner ausgelegt ist zum Erhalten einer Batteriewechselprozesssignals; und
wobei das Bestimmungsmodul (120) ferner ausgelegt ist zum Bestimmen der tatsächlichen Überwachungsregion basierend auf dem erhaltenen Ergebnis der elektrischen Signale und einem erhaltenen Ergebnis des Batteriewechselprozesssignals.

## Revendications

1. Procédé de protection de sécurité pour une station de charge et de permutation de batterie, le procédé de protection de sécurité comprenant :
l'obtention de signaux électriques envoyés par des dispositifs de détection de position de la station de charge et de permutation de batterie, les signaux électriques étant envoyés par les dispositifs de détection de position lorsque les dispositifs de détection de position sont bloqués par un véhicule actuel avec une batterie à permuter (S101) ;
la détermination d'une position du véhicule actuel avec une batterie à permuter sur la base du nombre et des positions des signaux électriques obtenus ;
la sélection d'une région parmi une pluralité de régions de surveillance prédéfinies en tant que région de surveillance réelle sur la base de la position du véhicule actuel avec une batterie à permuter (5103) ; et
la commande de dispositifs de balayage de sécurité (3) de la station de charge et de permutation de batterie pour réaliser une surveillance de sécurité sur la base de la région de surveillance réelle (S105).

2. Procédé de protection de sécurité pour la station de charge et de permutation de batterie selon la revendication 1, dans lequel les régions de surveillance prédéfinies comprennent une première région de surveillance, une deuxième région de surveillance, et une troisième région de surveillance, la première région de surveillance couvre la plateforme de permutation de batterie (1), la deuxième région de surveillance couvre deux côtés de la plateforme de permutation de batterie (1) qui s'étendent le long d'une direction de longueur du véhicule (5) avec une batterie à permuter et un côté de la plateforme de permutation de batterie (1) qui s'étend le long d'une direction de largeur du véhicule (5) avec une batterie à permuter et loin d'une entrée de la plateforme de permutation de batterie (1), et la troisième région de surveillance couvre les deux côtés de la plateforme de permutation de batterie (1) qui s'étendent le long de la direction de la longueur du véhicule (5) avec une batterie à permuter et deux côtés de la plateforme de permutation de batterie (1) qui s'étendent le long de la direction de la largeur du véhicule (5) avec une batterie à permuter.

3. Procédé de protection de sécurité pour la station de charge et de permutation de batterie selon la revendication 2, le procédé de protection de sécurité comprenant en outre :
lorsqu'aucun signal électrique n'est obtenu, la détermination que la région de surveillance réelle est la première région de surveillance ; et/ou
lorsque seulement des signaux électriques envoyés par les dispositifs de détection de position agencés à l'extérieur de l'entrée de la plateforme de permutation de batterie (1) sont obtenus, la détermination que la région de surveillance réelle est la deuxième région de surveillance ; et/ou
lorsque seulement des signaux électriques envoyés par les dispositifs de détection de position agencés correspondant à la plateforme de permutation de batterie (1) sont obtenus, la détermination que la région de surveillance réelle est la troisième région de surveillance.

4. Procédé de protection de sécurité pour la station de charge et de permutation de batterie selon la revendication 2 ou la revendication 3, le procédé de protection de sécurité comprenant en outre :
l'obtention d'un signal de processus de permutation de batterie ; et
la détermination de la région de surveillance réelle sur la base du résultat obtenu des signaux électriques et d'un résultat obtenu du signal de processus de permutation de batterie.

5. Procédé de protection de sécurité pour la station de charge et de permutation de batterie selon la revendication 4, dans lequel le signal de processus de permutation de batterie comprend un signal de fermeture de porte pouvant être fermée, et le procédé de protection de sécurité comprend en outre :
lorsque le signal de fermeture de porte pouvant être fermée et les signaux électriques envoyés par les dispositifs de détection de position agencés à l'extérieur de l'entrée de la plateforme de permutation de batterie (1) sont obtenus, la détermination que la région de surveillance réelle est la deuxième région de surveillance.

6. Procédé de protection de sécurité pour la station de charge et de permutation de batterie selon la revendication 4 ou la revendication 5, dans lequel le signal de processus de permutation de batterie comprend un signal d'achèvement de centrage, et le procédé de protection de sécurité comprend en outre :
lorsque le signal d'achèvement de centrage et les signaux électriques envoyés par les dispositifs de détection de position agencés correspondant à la plateforme de permutation de batterie (1) sont obtenus, la détermination que la région de surveillance réelle est la troisième région de surveillance.

7. Procédé de protection de sécurité pour la station de charge et de permutation de batterie selon l'une quelconque des revendications 4 à 6, dans lequel le signal de processus de permutation de batterie comprend un signal de fermeture de porte pouvant être fermée et un signal d'achèvement de permutation de batterie, et le procédé de protection de sécurité comprend en outre :
lorsque le signal de fermeture de porte pouvant être fermée, le signal d'achèvement de permutation de batterie, et les signaux électriques envoyés par les dispositifs de détection de position agencés correspondant à la plateforme de permutation de batterie (1) sont obtenus, la détermination que la région de surveillance réelle est la deuxième région de surveillance.

8. Procédé de protection de sécurité pour la station de charge et de permutation de batterie selon l'une quelconque des revendications 4 à 7, dans lequel le signal de processus de permutation de batterie comprend un signal d'achèvement de permutation de batterie, et le procédé de protection de sécurité comprend en outre :
lorsque le signal d'achèvement de permutation de batterie et un signal électrique envoyé par seulement un dispositif de détection de position, loin de l'entrée de la plateforme de permutation de batterie (1), dans les deux dispositifs de détection de position agencés à l'extérieur de l'entrée de la plateforme de permutation de batterie (1) sont obtenus, la détermination que la région de surveillance réelle est la première région de surveillance.

9. Procédé de protection de sécurité pour la station de charge et de permutation de batterie selon l'une quelconque des revendications 5 à 8, le procédé de protection de sécurité comprenant en outre :
lorsque des signaux d'intrusion envoyés par les dispositifs de balayage de sécurité (3) sont obtenus, l'établissement d'un statut ouvert/fermé de la porte pouvant être fermée (11) ;
la détermination d'appareils nécessitant d'être arrêtés sur la base d'un résultat d'établissement ; et
la commande des appareils nécessitant d'être arrêtés pour qu'ils arrêtent de fonctionner.

10. Procédé de protection de sécurité pour la station de charge et de permutation de batterie selon la revendication 9, dans lequel l'étape consistant à « déterminer les appareils nécessitant d'être arrêtés sur la base d'un résultat d'établissement » comprend en outre :
si la porte pouvant être fermée (11) est dans un état ouvert, la détermination que les appareils nécessitant d'être arrêtés sont un appareil de levage de véhicule, des appareils de centrage de véhicule (4), un appareil de levage pour un robot de permutation de batterie, et la porte pouvant être fermée (11) ; et
si la porte pouvant être fermée (11) est dans un état fermé, la détermination que les appareils nécessitant d'être arrêtés sont les appareils de centrage de véhicule (4) et la porte pouvant être fermée (11).

11. Procédé de protection de sécurité pour la station de charge et de permutation de batterie selon l'une quelconque des revendications 1 à 10, le procédé de protection de sécurité comprenant en outre :
l'obtention d'un mode de fonctionnement actuel de la station de charge et de permutation de batterie ; et
si le mode de fonctionnement actuel est un mode de maintenance, la commande des dispositifs de balayage de sécurité (3) pour qu'ils arrêtent de fonctionner ou qu'ils arrêtent d'envoyer des signaux d'intrusion.

12. Système de protection de sécurité (100) pour une station de charge et de permutation de batterie, dans lequel la station de charge et de permutation de batterie comprend une plateforme de permutation de batterie (1), un appareil de permutation de batterie, des dispositifs de détection de position (2a, 2b, 2c, et 2d), et des dispositifs de balayage de sécurité (3), la plateforme de permutation de batterie (1) est configurée pour supporter un véhicule (5) avec une batterie à permuter (5), les dispositifs de détection de position (2a, 2b, 2c, et 2d) sont configurés pour envoyer des signaux électriques lorsqu'ils sont bloqués, et le dispositif de balayage de sécurité (3) est configuré pour surveiller une région parmi une pluralité de régions de surveillance prédéfinies à chaque fois ; et
le système de protection de sécurité (100) comprend :
un module d'obtention (110) configuré pour obtenir les signaux électriques envoyés par les dispositifs de détection de position (2a, 2b, 2c, et 2d) lorsque les dispositifs de détection de position (2a, 2b, 2c, et 2d) sont bloqués par un véhicule actuel avec une batterie à permuter ;
un module de détermination (120) configuré pour déterminer une position du véhicule actuel avec une batterie à permuter sur la base du nombre et des positions des signaux électriques obtenus et pour sélectionner la région parmi la pluralité de régions de surveillance prédéfinies en tant que région de surveillance réelle sur la base de la position du véhicule actuel avec une batterie à permuter ; et
un module de commande (130) configuré pour commander les dispositifs de balayage de sécurité (3) afin qu'ils réalisent une surveillance de sécurité sur la base de la région de surveillance réelle.

13. Système de protection de sécurité (100) pour la station de charge et de permutation de batterie selon la revendication 12, dans lequel les régions de surveillance prédéfinies comprennent une première région de surveillance, une deuxième région de surveillance, et une troisième région de surveillance, la première région de surveillance couvre la plateforme de permutation de batterie (1), la deuxième région de surveillance couvre deux côtés de la plateforme de permutation de batterie (1) qui s'étendent le long d'une direction de longueur du véhicule (5) avec une batterie à permuter (5) et un côté de la plateforme de permutation de batterie (1) qui s'étend le long d'une direction de largeur du véhicule (5) avec une batterie à permuter (5) et loin d'une entrée de la plateforme de permutation de batterie (1), et la troisième région de surveillance couvre les deux côtés de la plateforme de permutation de batterie (1) qui s'étendent le long de la direction de la longueur du véhicule (5) avec une batterie à permuter (5) et deux côtés de la plateforme de permutation de batterie (1) qui s'étendent le long de la direction de la largeur du véhicule (5) avec une batterie à permuter (5).

14. Système de protection de sécurité (100) pour la station de charge et de permutation de batterie selon la revendication 13, dans lequel il y a une pluralité de dispositifs de détection de position, une partie des dispositifs de détection de position sont agencés à l'extérieur de l'entrée de la plateforme de permutation de batterie (1), l'autre partie des dispositifs de détection de position est agencée de manière à correspondre à la plateforme de permutation de batterie (1), et le module de détermination (120) est en outre configuré pour déterminer la région de surveillance réelle sur la base du résultat obtenu de la manière suivante :
lorsqu'aucun signal électrique n'est obtenu, la détermination que la région de surveillance réelle est la première région de surveillance ; et/ou
lorsque seulement des signaux électriques envoyés par les dispositifs de détection de position agencés à l'extérieur de l'entrée de la plateforme de permutation de batterie (1) sont obtenus, la détermination que la région de surveillance réelle est la deuxième région de surveillance ; et/ou
lorsque seulement des signaux électriques envoyés par les dispositifs de détection de position agencés correspondant à la plateforme de permutation de batterie (1) sont obtenus, la détermination que la région de surveillance réelle est la troisième région de surveillance.

15. Système de protection de sécurité (100) pour la station de charge et de permutation de batterie selon la revendication 13 ou la revendication 14, dans lequel il y a une pluralité de dispositifs de détection de position, une partie des dispositifs de détection de position est agencée à l'extérieur de l'entrée de la plateforme de permutation de batterie (1), et l'autre partie des dispositifs de détection de position est agencée de façon à correspondre à la plateforme de permutation de batterie (1) ;
le module d'obtention (110) est en outre configuré pour obtenir un signal de processus de permutation de batterie ; et
le module de détermination (120) est en outre configuré pour déterminer la région de surveillance réelle sur la base du résultat obtenu des signaux électriques et d'un résultat obtenu du signal de processus de permutation de batterie.
